# FASCICULE DE BREVET EUROPEEN

(11) **EP 0 726 407 B1**
(45) Date de publication et mention de la délivrance du brevet: **17.11.1999**
(21) Numéro de dépôt: 96101656.5
(22) Date de dépôt: 06.02.1996
(51) Int. Cl.: F16F 7/08, F16F 3/04, F16F 1/12, F16F 15/131, F16D 3/62

(54) **Dispositif élastique du type à cassette pour un double volant amortisseur, notamment pour véhicule automobile**
Kassettentyp-elastische Vorrichtung für Doppelschwungraddämpfer, insbesondere für Kraftfahrzeuge
Cassette-type resilient device for double-flywheel damper, particularly for motor vehicles

(30) Priorité: 08.02.1995 FR 9501542; 07.12.1995 FR 9514502
(43) Date de publication de la demande: 14.08.1996
(73) Titulaire: VALEO, 75017 Paris (FR)
(72) Inventeur: Mokdad, Ayman, F-93400 Saint-Ouen (FR); Bochot, Jean-Claude, F-77410 Claye-Souilly (FR)
(74) Mandataire: Gamonal, Didier

(56) Documents cités:
- WO-A-94/27062
- DE-C- 135 393
- DE-C- 203 047
- DE-C- 727 251
- FR-A- 1 039 552
- FR-A- 2 716 511
- FR-A- 2 718 813
- PATENT ABSTRACTS OF JAPAN vol. 018, no. 644 (M-1718), 7 Décembre 1994 & JP-A-06 249289 (AISIN SEIKI CO LTD), 6 Septembre 1994,

## Description

La présente invention concerne un dispositif élastique d'amortissement pour un double volant amortisseur destiné à être implanté radialement pour accoupler élastiquement deux masses tournantes du volant et monté à articulation sur l'une et l'autre de celles-ci.

Les volants amortisseurs, notamment pour véhicule automobile, du genre comportant deux masses coaxiales sont montées mobiles en rotation l'une par rapport à l'autre, à l'encontre d'un dispositif élastique d'amortissement comportant au moins un organe élastique intervenant globalement radialement entre les deux masses tournantes.

Un tel volant amortisseur, appelé aussi double volant amortisseur, est décrit par exemple dans le document FR-A-2 716 511 déposé le 23 décembre 1993 et publié après la date de priorité de la demande présente.

Dans ce document, dans une forme de réalisation, l'organe élastique est monté à articulation sur les deux masses tournantes par l'intermédiaire de tirants montés tête-bêche.

Chaque tirant présente une base et des dents se raccordant à ladite base. Les dents des tirants sont montées chacune à l'intérieur du tube-guide et délimitent des logements pour le montage d'organes élastiques.

Ainsi, un frottement intervient au niveau des tubes-guides lors du mouvement relatif entre les deux tirants.

Cette disposition donne satisfaction, néanmoins il s'est avéré souhaitable, dans certains cas, d'augmenter la rigidité des pièces servant au montage des organes élastiques, ainsi que d'améliorer leur guidage et d'accroître les frottements.

Afin de résoudre ce problème, il a été proposé dans le document EP-A-701667 (WO-A-95/28579)-membre de famille de FR-A-2 718 813, déposé le 14 avril 1994, est formant un état de la technique selon l'article 54(3)(4)CBE- un dispositif élastique d'amortissement pour un double volant amortisseur destiné à être implanté radialement pour accoupler élastiquement deux masses tournantes du volant et monté à articulation sur l'une et l'autre de celles-ci, du type comportant au moins un organe élastique monté dans une cassette articulée qui comporte, d'une part, un voile doté d'au moins un premier logement pour montage de l'organe élastique et, d'autre part, deux pièces de guidage fixées l'une à l'autre, disposées axialement de part et d'autre du voile et présentant, en regard du premier logement, chacune un second logement pour montage de l'organe élastique, dans laquelle le voile et les pièces de guidage sont montés tête-bêche, du type dans laquelle le déplacement du voile par rapport aux pièces de guidage est guidé radialement par des patins de guidage par frottement intervenant latéralement entre les bords latéraux du voile et les bords latéraux des pièces de guidage formant un boîtier pour le logement desdits patins de guidage, et du type dans laquelle le voile est susceptible de se déplacer par rapport aux pièces de guidage selon une course maximale entre une position extrême de repos vers laquelle il est rappelé par l'organe élastique et une position active extrême.

Grâce à cette conception, le dispositif élastique est constitué par une série de cassettes articulées servant au logement et au guidage des organes élastiques. Chaque cassette articulée est plus rigide que les tirants de l'art antérieur, du fait notamment que les pièces de guidage encadrent le voile, en étant fixées entre elles.

En outre, les premier et second logements permettent un bon guidage de chaque organe élastique.

Grâce à la disposition selon cette conception, il est possible d'intégrer aisément des dispositifs de frottement constitués par les patins de guidage, à l'intérieur de chaque cassette, et ceci à la faveur du voile et des pièces de guidage.

Dans ce document, on constate toutefois que les patins de guidage sont moins hauts que le voile et les pièces de guidage, limitant ainsi leur effet de guidage et d'organes de frottement et intervenant de manière variable au fur et à mesure du déplacement relatif du voile par rapport aux pièces de guidage entre les deux positions extrêmes active et de repos.

De plus, la liaison en translation des patins de guidage avec le voile par des moyens à coopération de formes complémentaires complique l'assemblage des différents composants de chaque cassette.

La présente invention a pour but de proposer un perfectionnement à la conception des cassettes qui vient d'être décrite.

Dans ce but, l'invention propose un dispositif élastique du type mentionné précédemment, caractérisé en ce que, en position extrême de repos, chaque patin de guidage intervient sur une première longueur L1 sensiblement égale à toute la hauteur des parties en regard des bords latéraux du voile et des pièces de guidage.

Grâce à l'invention on augmente la longueur de guidage, ce qui permet un meilleur coulissement du voile et diminue les risques de coincement.

Selon d'autres caractéristiques de l'invention :
- en position extrême active, chaque patin de guidage intervient sur une deuxième longueur L2 sensiblement égale à toute la hauteur des portions en regard des bords latéraux du voile et des pièces de guidage ;
- la longueur active de chaque patin de guidage est sensiblement égale à la première longueur L1, et la deuxième longueur L2 est inférieure à la première longueur L1 ;
- la longueur active de chaque patin de guidage est supérieure à la première longueur L1, et la deuxième longueur L2 est supérieure à la première longueur L1 ;
- le voile présente, à l'une de ses périphéries radiales interne et externe, une première protubérance pour le montage de premiers moyens d'articulation de la cassette sur une première des masses tournantes, autour d'un premier axe, tandis que les pièces de guidage présentent chacune, a l'une de leurs périphéries radiales externe et interne, une seconde protubérance, en regard l'une avec l'autre, pour le montage de seconds moyens d'articulation sur la seconde des masses tournantes, autour d'un second axe parallèle au premier axe, lesdites seconde et première protubérances étant décalées radialement l'une par rapport à l'autre ;
- dans la position extrême de repos, la première longueur L1 est située entre les deux axes d'articulation ;
- dans la position extrême active, la deuxième longueur L2 est située au moins en partie radialement au-delà de l'un des axes d'articulation ;
- les patins de guidage sont solidaires des pièces de guidage ;
- chaque patin de guidage présente en section une forme de U pour former une rainure de guidage pour un bord latéral du voile ;
- chaque patin de guidage comporte des picots engagés dans des ouvertures complémentaires pratiquées dans les bords latéraux des pièces de guidage formant boîtier pour le logement du patin de guidage ;
- des extrémités opposées de l'organe élastique s'appuient sur des coupelles disposées entre ces extrémités et les bords d'appui des logements pratiqués dans le voile et les pièces de guidage ;
- chaque coupelle comporte un centreur pour l'organe élastique ;
- l'organe élastique est de forme tubulaire, notamment un ressort hélicoïdal de compression ;
- chaque centreur comporte, pour réduction des bruits, un bloc amortisseur à son extrémité libre qui s'étend à l'intérieur de l'organe élastique ;
- chaque cassette comporte au moins une paire d'organes élastiques agencés en parallèle ;
- chaque cassette comporte deux organes élastiques parallèles montés dans une paire de premiers logements et dans une paire de seconds logements parallèles ;
- chaque organe élastique est constitué par deux ressorts hélicoïdaux de compression montés concentriquement.

D'autres caractéristiques et avantages de l'invention apparaîtront à la lecture de la description détaillée qui suit pour la compréhension de laquelle on se reportera aux dessins annexés dans lesquels :
- la figure 1 est une vue en perspective éclatée illustrant les principaux composants d'une cassette à ressorts réalisée conformément aux enseignements de l'invention ;
- la figure 2 est une vue latérale en élévation de la cassette de la figure 1 en position assemblée de ses composants ;
- la figure 3 est une vue en section selon la ligne 3-3 de la figure 2 ;
- la figure 4 est une vue en section selon la ligne 4-4 de la figure 2 ;
- la figure 5 est une vue à plus grande échelle du détail A de la figure 2, illustré partiellement en section par le plan du voile ; et
- les figures 6 à 8 sont des vues similaires à celles des figures 2 à 4 qui illustrent un deuxième mode de réalisation d'une cassette à ressorts conforme aux enseignements de l'invention.

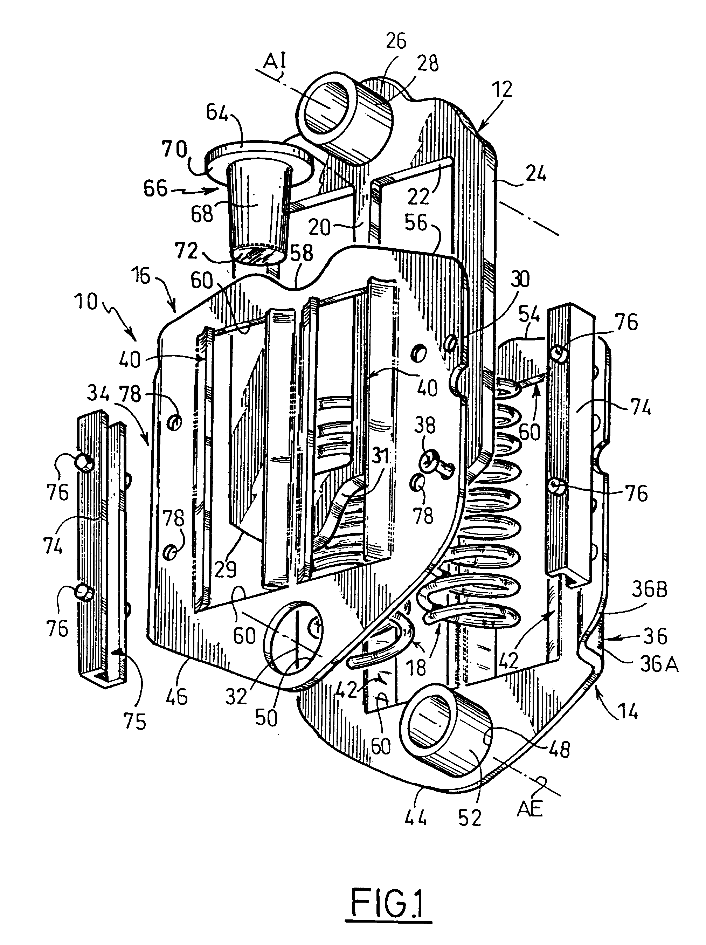

On a représenté aux figures 1 à 5 une cassette 10 de structure générale connue, par exemple du document FR-A-2 718 813 au contenu duquel on pourra se reporter, et qui constitue l'un des composants d'un dispositif élastique d'amortissement d'action globale radiale destiné à être interposé entre les deux masses tournantes d'un double volant amortisseur dont un exemple de conception est également décrit dans le document FR-A-2 718 813.

La cassette 10 est constituée pour l'essentiel par un voile interne 12 réalisé sous la forme d'une plaque de tôle découpée et par deux pièces de guidage 14 et 16 disposées de part et d'autre des faces transversales planes et opposées du voile interne 12 et qui constituent un boîtier à l'intérieur duquel le voile 12 est monté coulissant avec interposition, dans l'exemple illustré sur les figures, d'une paire d'organes élastiques d'amortissement 18.

Le voile interne 12 et les pièces de guidage 14 et 16 s'étendent dans des plans parallèles et, lorsque la cassette 10 est montée dans un double volant amortisseur, perpendiculaires à l'axe commun de rotation des deux masses tournantes pour la position de repos du volant amortisseur.

Le voile interne 12 présente une forme générale rectangulaire à l'intérieur de laquelle sont découpées deux fenêtres parallèles 20 d'orientation radiale, dans le volant amortisseur, dont chacune est prévue pour le montage de l'un des organes élastiques 18.

Chaque fenêtre 20 du voile 12 est délimitée par deux bords transversaux d'extrémité 22.

La plaque constituant le voile interne 12 est délimitée latéralement par deux bords longitudinaux parallèles 24 de même orientation radiale que les fenêtres 20.

A sa périphérie radiale interne, c'est-à-dire à la partie supérieure en considérant la figure 1, la plaque constituant le voile 12 comporte une protubérance 26 pour le montage, par exemple par soudage, d'une douille 28 constituant un moyen d'articulation de la cassette 10 sur une première masse tournante (non représentée) autour d'un premier axe interne d'articulation AI parallèle à l'axe de rotation des masses tournantes.

A sa périphérie radiale externe 29, la plaque 12 comporte une échancrure centrale 31 en forme d'arc de cercle.

Les deux pièces de guidage 14 et 16 sont deux pièces identiques réalisées par découpage, pliage et/ou emboutissage à partir d'une tôle.

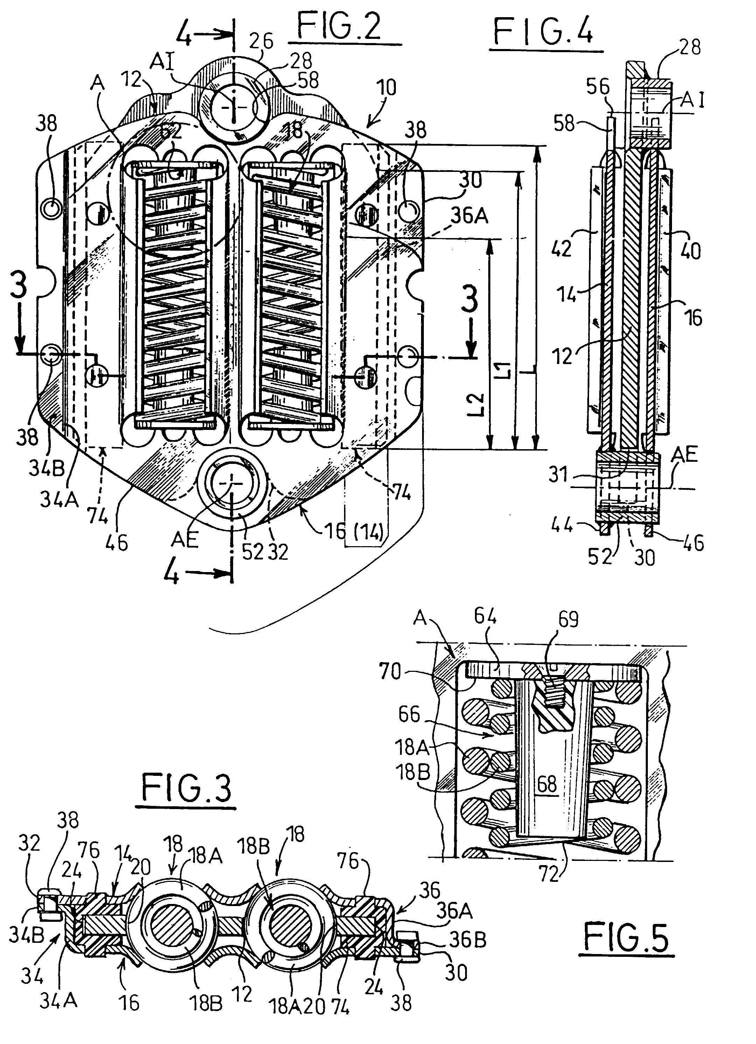

Chaque plaque de guidage 16, 14 présente une forme sensiblement rectangulaire délimitée par un bord latéral 30, 32 d'orientation radiale et par un bord latéral 34, 36 rabattu deux fois à 90° et constitués chacun par un bord latéral proprement dit 34A, 36A, dont la dimension détermine l'épaisseur axiale du boîtier constitué par les deux pièces de guidage, et par une patte rabattue à 90° 34B, 36B qui s'étend dans un plan parallèle des plaques 14 et 16 et qui, comme on peut le voir sur la figure 3, permet d'assurer la fixation mutuelle des deux plaques 14 et 16 au moyen de rivets 38.

Chacune des deux plaques de guidage 14, 16 comporte une paire de logements 42, 40 qui sont réalisés sous la forme de fenêtres parallèles d'orientation radiale qui, en position assemblée des composants de la cassette 10, sont en vis-à-vis des fenêtres 20 de la plaque interne 12 et dont les bords sont rabattus légèrement vers l'extérieur de manière à maintenir les organes élastiques 18.

Dans le mode de réalisation illustré sur les figures, et comme on peut le voir plus particulièrement sur la figure 3, chaque organe élastique 18 est constitué par une paire de ressorts hélicoïdaux 18A, 18B montés concentriquement, c'est-à-dire selon un montage "compound".

Pour des raisons de simplification de la représentation, un seul ressort 18 est représenté sur la figure 1.

La périphérie radiale externe 44, 46 de chaque plaque de guidage 14, 16 se présente sous la forme d'une protubérance dont chacune comporte un trou 48, 50 destiné à recevoir une douille 52 constituant une douille d'articulation d'axe AS constituant le second axe d'articulation de la cassette sur la seconde masse tournante d'un double volant amortisseur, parallèle à l'axe AI.

Le bord radial interne 54, 56 de chacune des plaques de guidage 14, 16 comporte une échancrure centrale 58 de profil semi-circulaire.

Les fenêtres 40 et 42 présentent sensiblement la même longueur, d'orientation radiale, que les fenêtres 20 du voile interne 24 et sont délimitées par des bords transversaux opposés 60.

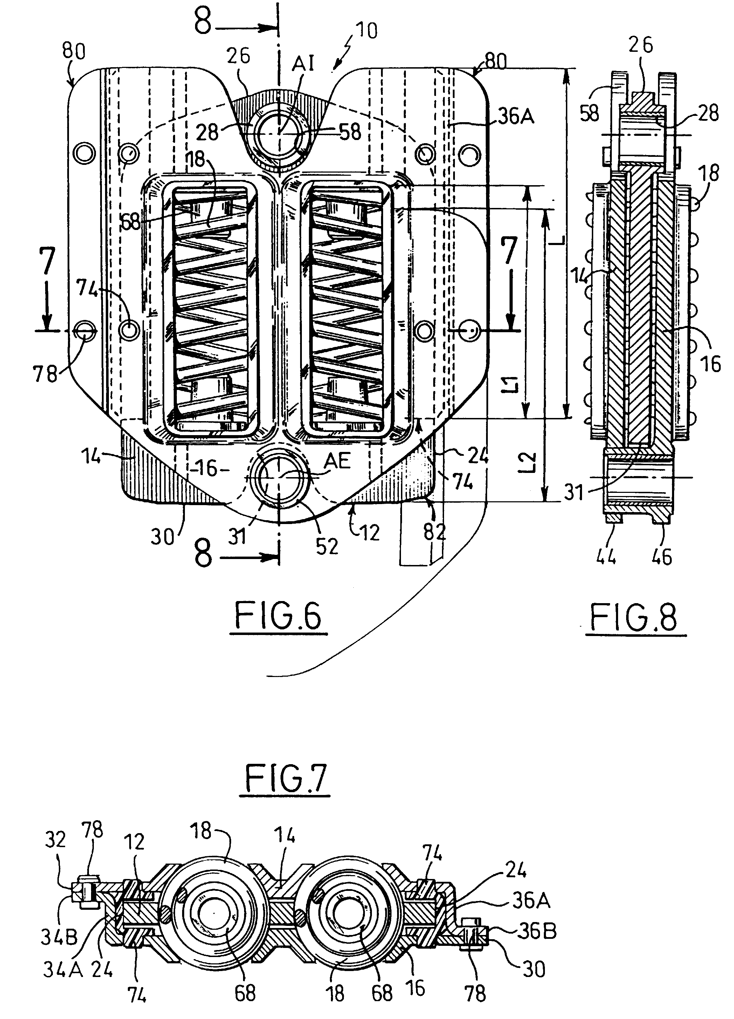

Comme on peut le voir aux figures 2 et 5, les bords transversaux 22 et 60 des fenêtres qui reçoivent les paires de ressorts peuvent être découpés pour constituer des surfaces d'appui centrales ponctuelles 62 contre lesquelles prennent appui des rondelles 64 appartenant à des centreurs 66, les extrémités opposées de chaque paire de ressorts 18A, 18B recevant un centreur 66.

Outre sa rondelle 64, chaque centreur 66 comporte un bloc central 68 qui s'étend depuis la face 70 de la rondelle 64, contre laquelle prennent appui les extrémités des ressorts, a l'intérieur du ressort central 18B.

Chaque bloc central 68 est fixé à la rondelle 64 par une vis 69 et il est délimité par une face transversale d'extrémité 72.

La rondelle ou coupelle 64 est en matière plastique et elle est interposée entre les extrémités des ressorts 18A, 18B et les bords d'appui des fenêtres pratiquées en vis-à-vis dans le voile 12 et les plaques de guidage 14 et 16. Chaque bloc central 68 formant centreur est réalisé en matière élastiquement déformable, telle que de l'élastomère.

Lors du déplacement relatif du voile 12 par rapport aux pièces de guidage 14 et 16, les faces transversales en vis-à-vis 72 des centreurs 66 sont susceptibles de venir en contact pour déterminer une position extrême active de la cassette 10 et pour empêcher la venue à spires jointives des ressorts, afin de limiter les bruits de fonctionnement.

La position de repos du voile 12 par rapport aux pièces de guidage 14 et 16 illustrées aux figures 2 et 4, vers laquelle ces éléments sont rappelés élastiquement sous l'action des organes élastiques 18, est déterminée par la venue en butée de la douille 52 contre les échancrures 31 et/ou de la douille 28 contre l'échancrure 58 de la pièce de guidage 16.

Conformément aux enseignements de l'invention, le déplacement en coulissement du voile 12 par rapport aux pièces de guidage 14 et 16 est guidé par deux patins de guidage 74 fixés aux plaques de guidage 14, 16.

Les patins de guidage 74 sont ici en matière plastique moulable à faible coefficient. Bien entendu selon les applications on peut augmenter le coefficient de frottement des patins.

Ces patins 74 guident radialement le voile 12. Les patins 74 présentent en section, comme on peut le voir sur la figure 3, une forme de U et délimitent ainsi des rainures 75 de guidage pour les bords latéraux opposés 24 du voile interne 12 parallèles au ressort 18. Les patins 74, qui sont ici en matière plastique à faible coefficient de frottement, comportent des picots 76 qui sont engagés par encliquetage dans des ouvertures en forme de trous circulaires complémentaires 78 pratiqués dans les portions en vis-à-vis de plaques de guidage 14 et 16 au voisinage de leurs bords latéraux 30, 32, 34, 36 qui délimitent des boîtiers opposés dont chacun constitue un logement pour un patin 74 dont la base s'appuie sur les parties 34A, 36A des bords latéraux des pièces de guidage 14, 16.

Plus précisément, la face externe du patin s'appuie sur la face interne de la partie 14,16.

Conformément aux enseignements de l'invention, la longueur d'orientation radiale L de chaque patin de guidage 74, et sa position par rapport aux plaques de guidage 14 et 16 sont telles que, dans la position de repos illustrée à la figure 2, chaque patin de guidage 74 intervient latéralement entre un bord latéral 24 et la partie en vis-à-vis du bord latéral 34, 36 des plaques de guidage 14 et 16 sur une longueur L1 égale à toute la hauteur des parties en regard 24, 36A, 36B des bords latéraux 24 du voile 12 et 34, 36 des pièces de guidage 14 et 16.

Ainsi, dès le début du mouvement relatif du voile 12 par rapport au boîtier constitué par les plaques de guidage 14 et 16, ce mouvement est parfaitement guidé selon la direction d'orientation générale radiale passant par les axes AI et AE et les surfaces de frottement entre les patins 74 et les faces opposées du voile interne 12 sont maximales.

On a aussi représenté en silhouette, et uniquement à la partie droite de la figure 2, la position relative extrême qu'occupe le boîtier constitué par les plaques de guidage 14 et 16 avec les patins de guidage 74 lorsque les composants sont dans la position extrême active correspondant à la venue en butée des faces transversales d'extrémité 72 des centreurs 64.

Dans cette position, on constate que les patins 74 interviennent latéralement entre les bords latéraux 24 du voile interne 12 et 34A, 36A des plaques de guidage 14 et 16 sur une deuxième longueur L2 égale à la hauteur des portions en regard des bords latéraux du voile 12 et des pièces de guidage 14 et 16.

Dans ce premier mode de réalisation, la longueur L2 est inférieure à la première longueur L1 mais, quelle que soit la position relative du voile 12 par rapport aux pièces de guidage 14 et 16, les patins de guidage 74 interviennent toujours sur toute la hauteur des portions en vis-à-vis des bords latéraux de ses composants, ce qui réduit les coincements et favorise le coulissement du voile 12 par rapport aux plaques de guidage 14,16.

Dans ce premier mode de réalisation illustré aux figures 1 à 4, les patins de guidage 74 sont centrés par rapport au voile 12, c'est-à-dire qu'ils sont situés entièrement entre les axes AI et AE lorsque la cassette 10 est dans sa position extrême de repos.

Dans la position active extrême illustrée en silhouette, on constate également que la zone de guidage et d'intervention des patins 74 de longueur L2 est aussi située entièrement entre les axes AI et AE, supprimant ainsi tout phénomène d'arc-boutement.

On décrira maintenant le deuxième mode de réalisation illustré aux figures 6 à 8 sur lesquelles les composants identiques ou similaires à ceux décrits en référence aux figures 1 à 5 sont désignés par les mêmes chiffres de référence.

Dans ce mode de réalisation, les patins de guidage 74 présentent une longueur d'orientation radiale L plus importante.

Les protubérances radiales internes des plaques de guidage 14 et 16 s'étendent radialement au-delà de l'axe AI et se présentent ainsi sous forme d'oreilles opposées 80 qui servent de support aux parties supérieures, en considérant la figure 6, des patins de guidage 74.

Dans la position de repos illustrée sur la figure 6, et comme dans le cas du premier mode de réalisation illustré sur la figure 2, les patins de guidage 74 interviennent sur une première longueur L1 égale à toute la hauteur des portions en vis-à-vis des bords latéraux 24 du voile interne 12 et 34A, 36A des plaques de guidage 14 et 16.

Dans la position extrême active illustrée en silhouette sur la figure 6, et conformément à une caractéristique de l'invention illustrée dans ce second mode de réalisation, les patins de guidage 74 interviennent sur une deuxième longueur L2 qui est égale à toute la hauteur des portions en vis-à-vis des bords latéraux du voile interne 12 et des plaques de guidage 14 et 16 qui est ici supérieure à la première longueur L1.

A cet effet, la périphérie radiale externe 30 du voile interne 12 s'étend radialement au-delà de l'axe AE et la plaque constituant le voile interne 12 comporte des oreilles opposées 82.

Dans la position extrême active, les patins de guidage 74 interviennent ainsi entre les plaques de guidage 14 et 16 et une très grande longueur des bords latéraux opposés 24 du voile interne 12.

Dans cette position extrême active, on constate également que la zone de guidage dans laquelle interviennent les patins 74 s'étend radialement légèrement au-delà de l'axe AE.

Dans ce second mode de réalisation, on constate donc que la longueur effective de guidage et d'intervention des patins de frottement est particulièrement élevée et qu'elle augmente au fur et à mesure du déplacement relatif du voile interne 12 par rapport aux plaques de guidage 14 et 16, accroissant ainsi le phénomène de frottement contre ces composants au fur et à mesure de la course relative des éléments à partir de la position de repos.

Pour mémoire on rappellera que le double volant amortisseur pour véhicule automobile comporte deux masses tournantes coaxiales accouplées élastiquement par le dispositif élastique d'amortissement à cassettes 10.

Les deux masses tournent l'une par rapport à l'autre autour de l'axe de symétrie axial du double volant. L'une des masses, dite première masse, est destinée à être fixée à un arbre menant, usuellement par des vis de fixation, ici le vilebrequin du moteur à combustion interne du véhicule, tandis que l'autre masse tournante, dite seconde masse, est liée en rotation de manière débrayable à un arbre mené, ici l'arbre d'entrée de la boîte de vitesses.

Plus précisément, la seconde masse forme le plateau de réaction d'un embrayage à friction dont le mécanisme d'embrayage est fixé par son couvercle sur la seconde masse. Le disque de friction de l'embrayage vient donc en contact de manière débrayable avec la seconde masse offrant à cet effet dorsalement une face de friction. Ce disque de friction est doté à sa périphérie interne d'un moyeu cannelé intérieurement pour sa liaison en rotation à l'arbre d'entrée de la boîte de vitesses.

La première masse porte à sa périphérie externe une couronne de démarrage destinée à être entraînée par le pignon d'un démarreur. Cette première masse comporte un plateau parallèle au plateau de réaction formant la seconde masse.

La seconde masse est montée tourillonnante sur la première masse à l'aide d'un palier, usuellement un roulement à billes, interposé radialement entre les deux masses.

Par exemple la première masse présente un moyeu central et le roulement intervient entre la périphérie externe dudit moyeu et la périphérie interne de la seconde masse. Bien entendu on peut inverser les structures, la seconde masse présentant à sa périphérie interne un moyeu central, le roulement intervenant alors entre la périphérie externe du moyeu de la première masse et la périphérie interne d'un moyeu appartenant à la première masse.

Les cassettes 10 sont montées par exemple à articulation à leur périphérie externe sur la première masse et à articulation à leur périphérie interne sur la seconde masse.

On peut bien entendu inverser les structures.

Ainsi, par exemple, la douille 52 de chaque cassette 10 est solidarisée par soudage aux plaques de guidage 14, 16 et est destinée à être montée sur un axe porté par la périphérie externe de la première masse, tandis que la douille 28 de chaque cassette 28 est solidaire par soudage du voile 12 et est destinée à être montée sur un axe porté par la périphérie interne de la seconde masse radialement au-dessus du roulement précité. Usuellement les axes portés par la première masse sont implantés globalement sur la même circonférence que les trous réalisés dans la seconde masse pour passage d'un outil de vissage et accès aux têtes des vis de fixation de la première masse au vilebrequin. En fonctionnement les cassettes 10 s'inclinent et un mouvement rotatif se produit entre le voile 12 et les pièces de guidage 14,16. Pour plus de précision on se reportera au document FR-A-2 718 813 précité, ou document FR-A-2 716 511 montrant les trous de la seconde masse pour accès aux têtes de vis ainsi que le roulement à billes (figures 1, 2, 9).

Bien entendu des moyens de frottement à action axiale sont également prévus. Ces moyens interviennent entre les deux masses tournantes.

## Revendications

1. Dispositif élastique d'amortissement pour un double volant amortisseur destiné à être implanté radialement pour accoupler élastiquement deux masses tournantes du volant et monté à articulation sur l'une et l'autre de celles-ci, du type comportant au moins un organe élastique d'amortissement (18) monté dans une cassette articulée (10) qui comporte, d'une part, un voile (12) doté d'au moins un premier logement (20) pour montage de l'organe élastique (18) et, d'autre part, deux pièces de guidage (14, 16) fixées l'une à l'autre, disposées axialement de part et d'autre du voile (12) et présentant, en regard du premier logement (20), chacune un second logement (40, 42) pour montage de l'organe élastique (18), dans laquelle le voile (12) et les pièces de guidage (14, 16) sont montés tête-bêche, du type dans laquelle le déplacement du voile (12) par rapport aux pièces de guidage (14, 16) est guidé radialement par des patins de guidage par frottement (74) intervenant latéralement entre les bords latéraux (24) du voile et des bords latéraux (34A, 36A) des pièces de guidage (14, 16) formant un boîtier pour le logement desdits patins de guidage (74), et du type dans laquelle le voile (12) est susceptible de se déplacer par rapport aux pièces de guidage (14, 16) selon une course maximale entre une position extrême de repos vers laquelle il est rappelé par l'organe élastique (18) et une position active extrême, en position extrême de repos, chaque patin de guidage (74) intervenant sur une première longueur (L1) sensiblement égale à toute la hauteur des parties en regard des bords latéraux (24) du voile (12) et (34A, 36A) des pièces de guidage (14, 16).

2. Dispositif élastique selon la revendication 1, caractérisé en ce que, en position extrême active, chaque patin de guidage (74) intervient sur une deuxième longueur (L2) sensiblement égale à toute la hauteur des parties en regard des bords latéraux (24) du voile (12) et (34A, 36A) des pièces de guidage (14, 16).

3. Dispositif élastique selon la revendication 2, caractérisé en ce que la longueur active (L) de chaque patin de guidage (74) est sensiblement égale à ladite première longueur (L1), et en ce que la deuxième longueur (L2) est inférieure à la première longueur (L1).

4. Dispositif élastique selon la revendication 2, caractérisé en ce que la longueur active (L) de chaque patin de guidage (74) est supérieure à la première longueur (L1), et en ce que la deuxième longueur (L2) est supérieure à la première longueur (L1).

5. Dispositif élastique selon l'une quelconque des revendications précédentes, caractérisé en ce que le voile (12) présente, à l'une (26) de ses périphéries radiales interne (26) et externe (29), une première protubérance pour le montage de premiers moyens (28) d'articulation de la cassette (10) sur une première des masses tournantes, autour d'un premier axe (AI), tandis que les pièces de guidage (14, 16) présentent chacune, à l'une (44, 46) de leurs périphéries radiales externe (44, 46) et interne (56, 58), une seconde protubérance, en regard l'une avec l'autre, pour le montage de seconds moyens (52) d'articulation sur la seconde des masses tournantes, autour d'un second axe (AE) parallèle au premier axe (AI), lesdites secondes (44, 46) et première (26) protubérances étant décalées radialement l'une par rapport à l'autre.

6. Dispositif élastique selon la revendication 5 prise en combinaison avec la revendication 3, caractérisé en ce que, dans la position extrême de repos, la première longueur (L1) est située entre les deux axes d'articulation (AI, AE).

7. Dispositif élastique selon la revendication 5 prise en combinaison avec la revendication 4, caractérisé en ce que, dans la position extrême active, la deuxième longueur (L2) est située au moins en partie radialement au-delà de l'un (AE) des axes d'articulation (AI, AE).

8. Dispositif élastique selon l'une quelconque des revendications précédentes, caractérisé en ce que les patins de guidage (74) sont solidaires des pièces de guidage (14, 16).

9. Dispositif élastique selon la revendication 8, caractérisé en ce que chaque patin de guidage (74) présente en section une forme de U pour former une rainure de guidage pour un bord latéral (24) du voile (12).

10. Dispositif élastique selon l'une des revendications 8 ou 9, caractérisé en ce que chaque patin de guidage (74) comporte des picots (76) engagés dans des ouvertures complémentaires (78) pratiquées dans les bords latéraux des pièces de guidage (14, 16) formant boîtier pour le logement du patin de guidage (74).

11. Dispositif élastique selon l'une quelconque des revendications précédentes, caractérisé en ce que des extrémités opposées de l'organe élastique (18, 18A, 18B) s'appuient sur des coupelles (64) interposées entre ces extrémités et les bords d'appui (22, 60) des logements pratiqués dans le voile (12) et les pièces de guidage (14, 16).

12. Dispositif élastique selon la revendication 11, caractérisé en ce que chaque coupelle (64) comporte un centreur (66, 68) pour l'organe élastique.

13. Dispositif élastique selon l'une des revendications 11 ou 12, caractérisé en ce que l'organe élastique (18, 18A, 18B) est de forme tubulaire, notamment un ressort hélicoïdal de compression.

14. Dispositif élastique selon la revendication 13 prise en combinaison avec la revendication 12, caractérisé en ce que chaque centreur (66) comporte un bloc amortisseur (68) à son extrémité libre qui s'étend à l'intérieur de l'organe élastique (18, 18A, 18B).

15. Dispositif élastique selon l'une quelconque des revendications précédentes, caractérisé en ce que chaque cassette (10) comporte au moins une paire d'organes élastiques (18) agencés en parallèle.

16. Dispositif élastique selon la revendication 15, caractérisé en ce que chaque cassette (10) comporte deux organes élastiques parallèles (18) montés dans une paire de premiers logements (20) et dans une paire de seconds logements parallèles (40, 42).

17. Dispositif élastique selon l'une quelconque des revendications précédentes, caractérisé en ce que chaque organe élastique (18) est constitué par deux ressorts hélicoïdaux de compression (18A, 18B) montés concentriquement.

## Patentansprüche

1. Elastische Dämpfungsvorrichtung für ein Zweimassen-Dämpfungsschwungrad, die dazu bestimmt ist, radial eingebaut zu werden, um zwei umlaufende Massen des Schwungrads elastisch zu verbinden, und gelenkig an der einen und der anderen dieser Massen gelagert ist, umfassend wenigstens ein elastisches Organ (18), das in einer angelenkten Kassette (10) gelagert ist, die einerseits eine Zwischenscheibe (12) mit wenigstens einer ersten Aufnahme (20) für die Lagerung des elastischen Organs (18) und andererseits zwei Führungsteile (14, 16) umfaßt, die axial beiderseits der Zwischenscheibe (12) angeordnet sind und gegenüber der ersten Aufnahme (20) jeweils eine zweite Aufnahme (40, 42) für die Lagerung des elastischen Organs (18) aufweisen, wobei die Zwischenscheibe (12) und die Führungsteile (14, 16) entgegengesetzt angebracht sind, wobei die Verschiebung der Zwischenscheibe (12) im Verhältnis zu den Führungsteilen (14, 16) durch Reibführungssegmente (74) radial geführt wird, die seitlich zwischen den Seitenkanten (24) der Zwischenscheibe und Seitenkanten (34A, 36A) der Führungsteile (14, 16) zum Einsatz kommen, die ein Gehäuse für die Aufnahme der besagten Führungssegmente (74) bilden, und wobei sich die Zwischenscheibe (12) im Verhältnis zu den Führungsteilen (14, 16) entlang einem maximalen Verstellweg zwischen einer Ruheendposition, zu der sie durch das elastische Organ (18) zurückgestellt wird, und einer Wirkendposition verschieben kann, wobei in der Ruheendposition jedes Führungssegment (74) auf einer ersten Länge (L1) wirksam wird, die in etwa gleich der gesamten Höhe der gegenüberliegenden Teile der Seitenkanten (24) der Zwischenscheibe (12) und (34A, 36A) der Führungsteile (14, 16) ist.

2. Elastische Vorrichtung nach Anspruch 1, **dadurch gekennzeichnet**, daß in der Wirkendposition jedes Führungssegment (74) auf einer zweiten Länge (L2) wirksam wird, die in etwa gleich der gesamten Höhe der gegenüberliegenden Teile der Seitenkanten (24) der Zwischenscheibe (12) und (34A, 36A) der Führungsteile (14, 16) ist.

3. Elastische Vorrichtung nach Anspruch 2, **dadurch gekennzeichnet**, daß die Wirklänge (L) jedes Führungssegments (74) in etwa gleich der besagten ersten Länge (L1) ist und daß die zweite Länge (L2) kleiner als die erste Länge (L1) ist.

4. Elastische Vorrichtung nach Anspruch 2, **dadurch gekennzeichnet**, daß die Wirklänge (L) jedes Führungssegments (74) größer als die erste Länge (L1) ist und daß die zweite Länge (L2) größer als die erste Länge (L1) ist.

5. Elastische Vorrichtung nach einem der vorangehenden Ansprüche, **dadurch gekennzeichnet**, daß die Zwischenscheibe (12) an einem (26) ihrer inneren (26) und äußeren (29) radialen Umfänge eine erste Ausstülpung für die Lagerung von ersten Anlenkmitteln (28) zur Anlenkung der Kassette (10) an einer ersten der umlaufenden Massen um eine erste Achse (AI) herum aufweist, während die Führungsteile (14, 16) jeweils an einem (44, 46) ihrer äußeren und inneren Umfänge (44, 46), einander gegenüberliegend, eine zweite Ausstülpung für die Lagerung von zweiten Anlenkmitteln (52) zur Anlenkung an der zweiten der umlaufenden Massen um eine zur ersten Achse (AI) parallele zweite Achse (AE) aufweisen, wobei die besagten zweiten (44, 46) und ersten (26) Ausstülpungen im Verhältnis zueinander radial versetzt sind.

6. Elastische Vorrichtung nach Anspruch 5 in Kombination mit Anspruch 3, **dadurch gekennzeichnet**, daß sich in der Ruheendposition die erste Länge (L1) zwischen den beiden Gelenkachsen (AI, AE) befindet.

7. Elastische Vorrichtung nach Anspruch 5 in Kombination mit Anspruch 4, **dadurch gekennzeichnet**, daß sich in der Wirkendposition die zweite Länge (L2) wenigstens teilweise radial jenseits einer (AE) der Gelenkachsen (AI, AE) befindet.

8. Elastische Vorrichtung nach einem der vorangehenden Ansprüche, **dadurch gekennzeichnet**, daß die Führungssegmente (74) fest mit den Führungsteilen (14, 16) verbunden sind.

9. Elastische Vorrichtung nach Anspruch 8, **dadurch gekennzeichnet**, daß jedes Führungssegment (74) im Querschnitt eine U-Form aufweist, um eine Führungsnut für eine Seitenkante (24) der Zwischenscheibe (12) zu bilden.

10. Elastische Vorrichtung nach einem der Ansprüche 8 oder 9, **dadurch gekennzeichnet,** daß jedes Führungssegment (74) Stifte (76) umfaßt, die in formschlüssige Öffnungen (78) eingesetzt sind, die in die Seitenkanten der Führungsteile (14, 16) eingearbeitet sind, die ein Gehäuse für die Aufnahme des Führungssegments (74) bilden.

11. Elastische Vorrichtung nach einem der vorangehenden Ansprüche, **dadurch gekennzeichnet**, daß gegenüberliegende Enden des elastischen Organs (18, 18A, 18B) auf Tellern (64) aufliegen, die zwischen diesen Enden und den Auflagekanten (22, 60) der in die Zwischenscheibe (12) und die Führungsteile (14, 16) eingearbeiteten Aufnahmen eingefügt sind.

12. Elastische Vorrichtung nach Anspruch 11, **dadurch gekennzeichnet**, daß jeder Teller (64) ein Zentrierelement (66, 68) für das elastische Organ umfaßt.

13. Elastische Vorrichtung nach einem der Ansprüche 11 oder 12, **dadurch gekennzeichnet**, daß das elastische Organ (18, 18A, 18B) rohrförmig, insbesondere als Schraubendruckfeder ausgeführt ist.

14. Elastische Vorrichtung nach Anspruch 13 in Kombination mit Anspruch 12, **dadurch gekennzeichnet**, daß jedes Zentrierelement (66) einen Dämpfungsblock (68) an seinem freien Ende umfaßt, der sich im Innern des elastischen Organs (18, 18A, 18B) erstreckt.

15. Elastische Vorrichtung nach einem der vorangehenden Ansprüche, **dadurch gekennzeichnet**, daß jede Kassette (10) wenigstens ein Paar parallel angeordneter elastischer Organe (18) umfaßt.

16. Elastische Vorrichtung nach Anspruch 15, **dadurch gekennzeichnet**, daß jede Kassette (10) zwei parallele elastische Organe (18) umfaßt, die in einem Paar erster Aufnahmen (20) und in einem Paar paralleler zweiter Aufnahmen (40, 42) gelagert sind.

17. Elastische Vorrichtung nach einem der vorangehenden Ansprüche, **dadurch gekennzeichnet**, daß jedes elastische Organ (18) aus zwei konzentrisch gelagerten Schraubendruckfedern (18A, 18B) besteht.

## Claims

1. A resilient damping device for a double damped flywheel, adapted to be mounted radially so as to couple together elastically two rotating masses of the flywheel and articulated on each of these latter, being of the type comprising at least one resilient damping member (18) mounted in an articulated cassette (10) which comprises, firstly, a damper plate (12) having at least one first housing (20) for mounting the resilient member (18) therein, and secondly two guide members (14, 16) fixed to each other and disposed axially on either side of the damper plate (12), with each guide member having, in facing relationship with the first housing (20), a second housing (40, 42) for mounting the resilient member (18), wherein the damper plate (12) and the guide members (14, 16) are mounted in head-to-toe relationship, the damping device being of the type in which the displacement of the damper plate (12) with respect to the guide members (14, 16) is guided radially by frictional guide pads (74) which are operatively interposed laterally between the side edges (24) of the damper plate and the side edges (34A, 36A) of the guide members (14, 16), whereby to define a housing for accommodation of the said guide pads (74), and the damping device being of the type in which the damper plate (12) is arranged to be displaceable with respect to the guide members (14, 16) along a maximum course of travel between an extreme rest position, towards which it is urged by the resilient member (18), and an extreme working position, with each guide pad (74) acting in the extreme rest position over a first length (Ll) which is substantially equal to the whole height of the facing portions of the side edges (24) of the damper plate (12) and the side edges (34A, 36A) of the guide members (14, 16).

2. A resilient device according to Claim 1,
characterised in that, in the extreme working position, each guide pad (74) acts over a second length (L2) which is substantially equal to the whole height of the mutually facing portions of the side edges (24) of the damper plate (12) and the side edges (34A, 36A) of the guide members (14, 16).

3. A resilient device according to Claim 2,
characterised in that the working length (L) of each guide pad (74) is substantially equal to the said first length (L1), and in that the second length (L2) is shorter than the first length (L1).

4. A resilient device according to Claim 2,
characterised in that the active length (L) of each guide pad (74) is greater than the first length (L1), and in that the second length (L2) is greater than the first length (L1).

5. A resilient device according to any one of the preceding Claims, characterised in that the damper plate (12), having an inner radial periphery (26) and an outer radial periphery (29), has at one of its peripheries (26) a first projecting element for mounting first articulating means (28) for articulating the cassette (10) on a first one of the rotating masses about a first axis (AI), while each of the guide members (14, 16), having an outer radial periphery (44, 46) and an inner radial periphery (56, 58), has a second projecting element at one of these peripheries (44, 46), the second projecting elements being in facing relationship with each other for mounting second means (52) for articulation on the second one of the rotating masses, about a second axis (AE) parallel to the first axis (AI), the said second projecting elements (44, 46) and first projecting element (26) being offset radially from each other.

6. A resilient device according to Claim 5 taken in combination with Claim 3, characterised in that, in the extreme rest position, the first length (L1) is situated between the two axes of articulation (AI, AE).

7. A resilient device according to Claim 5 taken in combination with Claim 4, characterised in that, in the extreme working position, the second length (L2) is situated at least partly radially beyond one (AE) of the axes of articulation (AI, AE).

8. A resilient device according to any one of the preceding Claims, characterised in that the guide pads (74) are fixed to the guide members (14, 16).

9. A resilient device according to Claim 8,
characterised in that each guide pad (74) has a U-shaped cross section such as to define a guide groove for a side edge (24) of the damper plate (12).

10. A resilient device according to Claim 8 or Claim 9, characterised in that each guide pad (74) includes bosses (76) engaged in complementary apertures (78), which are formed in the side edges of the guide members (14, 16), constituting a housing for accommodating the guide pad (74).

11. A resilient device according to any one of the preceding Claims, characterised in that the opposed ends of the resilient member (18, 18A, 18B) bear on insert pieces (64) which are interposed between the said ends and the abutment edges (22, 60) of the housings formed in the damper plate (12) and the guide members (14, 16).

12. A resilient device according to Claim 11,
characterised in that each insert piece (64) comprises a centring element (66, 68) for the resilient member.

13. A resilient device according to Claim 11 or Claim 12, characterised in that the resilient member (18, 18A, 18B) is tubular, and is in particular a helical compression spring.

14. A resilient device according to Claim 13 taken in combination with Claim 12, characterised in that each centring element (66) has at its free end a damping block (68) which extends into the interior of the resilient member (18, 18A, 18B).

15. A resilient device according to any one of the preceding Claims, characterised in that each cassette (10) has at least one pair of resilient members (18) arranged in parallel.

16. A resilient device according to Claim 15,
characterised in that each cassette (10) includes two parallel resilient members (18) mounted in a pair of first housings (20) and in a pair of parallel second housings (40, 42).

17. A resilient device according to any one of the preceding Claims, characterised in that each resilient member (18) consists of two helical compression springs (18A, 18B) mounted concentrically.
